Europäisches Patentamt

European Patent Office

Office européen des brevets

(11) Numéro de publication: **0 390 658**
**A1**

## (12) DEMANDE DE BREVET EUROPEEN

(21) Numéro de dépôt: **90400807.5**

(51) Int. Cl.5: **B65G 35/08, B61B 13/00**

(22) Date de dépôt: **23.03.90**

(30) Priorité: **31.03.89 FR 8904254**

(43) Date de publication de la demande:
**03.10.90 Bulletin 90/40**

(84) Etats contractants désignés:
**DE GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Gorisse, Pascal**
**THOMSON-CSF SCPI, Cédex 67**
**F-92045 Paris la Défense(FR)**
Inventeur: **Campus, Emigliano**
**THOMSON-CSF SCPI, Cédex 67**
**F-92045 Paris la Défense(FR)**

(74) Mandataire: **Ruellan-Lemonnier, Brigitte et al**
**THOMSON-CSF SCPI**
**F-92045 PARIS LA DEFENSE CEDEX 67(FR)**

(54) **Dispositif pour transporter des pièces vers un ou plusieurs postes de traitement, et les en évacuer.**

(57) L'invention est relative à un dispositif pour transporter des pièces vers un ou plusieurs postes de traitement et les en évacuer.

Ce dispositif comporte un rail (1) constituant un circuit fermé continu, et supportant une série de supports (2B-2C) qui sont en contact avec le rail au moyen de galets (23) dont l'un au moins est poussé élastiquement contre le rail. Chaque support est pourvu, au moins à une de ses extrémités, d'un roulement à billes (26) ou à rouleaux, par lequel il vient en contact avec le support qui le précède ou le suit. De préférence, le rail a une section comportant deux angles saillants opposés, et il est serré élastiquement entre des galets comportant une gorge de forme adaptée auxdits angles saillants. On obtient ainsi un positionnement précis dans le sens transversal de chaque support par rapport au rail, et les roulements à billes fournissent un contact précis, de faible usure, entre deux supports successifs, ce qui garantit un bon positionnement également dans le sens longitudinal.

Application aux installations automatisées de traitement de composants électroniques.

FIG.:2

# DISPOSITIF POUR TRANSPORTER DES PIECES VERS UN OU PLUSIEURS POSTES DE TRAITEMENT ET LES EN EVACUER

La présente invention est relative à un dispositif pour transporter des pièces à traiter vers un ou plusieurs postes de traitement et pour les en évacuer.

Le problème de transport de pièces vers un poste de traitement et de leur évacuation n'est pas nouveau, et des dispositifs destinés à ces opérations ont même donné son nom au travail "à la chaîne".

Les pièces sont habituellement portées par des chariots ou des supports divers, qui décrivent un circuit fermé passant par un poste de chargement, un poste de traitement et un poste de déchargement. Les chariots ou supports peuvent rouler sur le sol, ou être portés par des rails continus ou être entraînés par une série de moyens de transport successifs.

Le développement des traitements automatiques, et la nécessité d'obtenir des cadences toujours plus courtes et des précisions améliorées ont entraîné des évolutions dans divers sens. Il est ainsi apparu que les meilleurs résultats étaient obtenus quand les chariots-supports sont guidés avec précision au moins depuis le poste de chargement inclus jusqu'au poste de chargement inclus, et quand ils se succèdent en étant chacun en appui sur le précédent, les pièces à traiter étant fixées sur le chariot-support de façon à recevoir le traitement prévu sans en être déplacées. En effet, on limite ainsi au maximum les temps morts correspondant au nécessaire ajustement de l'outil de traitement avec chaque pièce à traiter.

On trouve dans le commerce un système qui répond à ces préoccupations, et qui comporte une série de chariots-supports montés sur les maillons d'une chaîne sans fin. Sur la partie du circuit fermé qui comprend les postes de chargement, traitements et déchargement, des rails rectilignes sont prévus pour assurer le positionnement précis, dans les directions trnsversales au déplacement, des chariots-supports qui roulent sur ces rails. En outre, les dimensions des maillons de la chaînes et la longueur des chariots-supports sont calculés pour que, dans cette partie rectiligne du trajet, les chariots-supports sont chacun en contact avec le précédent.

Cette disposition intéressante trouve cependant ses limites lorsqu'on cherche à augmenter les vitesses et les précisions. La cause en est principalement dns les jeux multiples qui résultent de l'emploi d'une chaîne et qui entraînent des usures et des imprécisions dans la position longitudinale relative des chariots-suppots. En outre, les frottements inhérents au système exigent des moyens d'entraînement puissants, qui présentent par conséquent une inertie appréciable gênante lorsqu'on veut des cadences rapides avec des mouvements non continus.

La présente invention a pour but de remédier à ces inconvénients. Elle fournit par conséquent un dispositif pour transporter des pièces à traiter vers un ou plusieurs postes de traitement et pour les en évacuer, ce dispositif comportant :
- une série de supports prévus pour supporter chacun au moins une pièce,
- des moyens de déplacement prévus pour déplacer les supports suivant un trajet fermé comprenant un poste de chargement, où les pièces à traiter sont posées ou fixées sur les supports, un ou plusieurs postes de traitement, où les pièces sont amenées dans une position définie à l'avance et sont traitées, et un poste d'évacuation, où les pièces traitées sont séparées des supports, ces moyens de déplacement comprenant au moins un rail le long duquel les supports se déplacent entre le poste de chargement, le ou les postes de traitement et le poste de déchargement, chacun d'eux étant en appui sur le support précédent,
qui présente pour particularités que :
- chaque support est pourvu, au moins à une de ses extrémités, d'un roulement à billes par lequel il vient en contact avec le support qui le précède ou le suit,
- chaque support est en contact avec le rail tout le long dudit trajet fermé,
- le contact du support avec le rail est obtenu au moyen de galets dont un au moins est pressé contre le raill à l'aide d'un moyen élastique.

De préférence, le rail a une section comportant deux angles saillants opposés, et au moins deux galets, comportant une gorge de forme adaptée auxdits angles saillants, les galets coopérant chacun avec un angle saillant opposé, l'un des galets étant porté par un équipage mobile, contraint par un ressort, et qui pousse ledit galet contre le rail pour assurer le positionnement précis du chariot dans le sens transversal.

Ces modalités permettent un positionnement précis de chaque chariot, à la fois dans le sens transversal au mouvement, et, dans le sens longitudinal, par rapport au chariot qui le précède ou le suit. Les galets et roulements à billes sont des objets précis, de faible usure, de remplacement facile, et cependant peu coûteux.

Selon des modalités préférées :
- les moyens de déplacement des supports comprennent un vérin qui fait avancer les supports au moins entre le poste de chargement et le premier poste de traitement,
- chaque chariot est pourvu de moyens de repérage de sa position dans le sens du déplacement.

Ces modalités permettent des cadences rapides de passage d'un support du poste de chargement au poste de traitement, ou de déplacement d'un support dans un poste de traitement, tout en conservant la précision nécessaire. Avantageusement, il est pourvu de moyens permettant l'enlèvement ou la mise en place rapide d'un support par écartement d'au moins un galet par rapport au rail.

Les temps d'immobilisation dus à un accident causant une avarie à un support sont ainsi réduits au minimum. Si le mouvement des supports est opéré à l'aide d'un vérin, comme il a été dit plus haut, on peut compenser l'absence d'un chariot en augmentant la course du vérin d'une longueur correspondante.

L'invention va maintenant être exposée de façon plus détaillée à l'aide d'un exemple pratique, illustré à l'aide des dessins parmi lesquels :

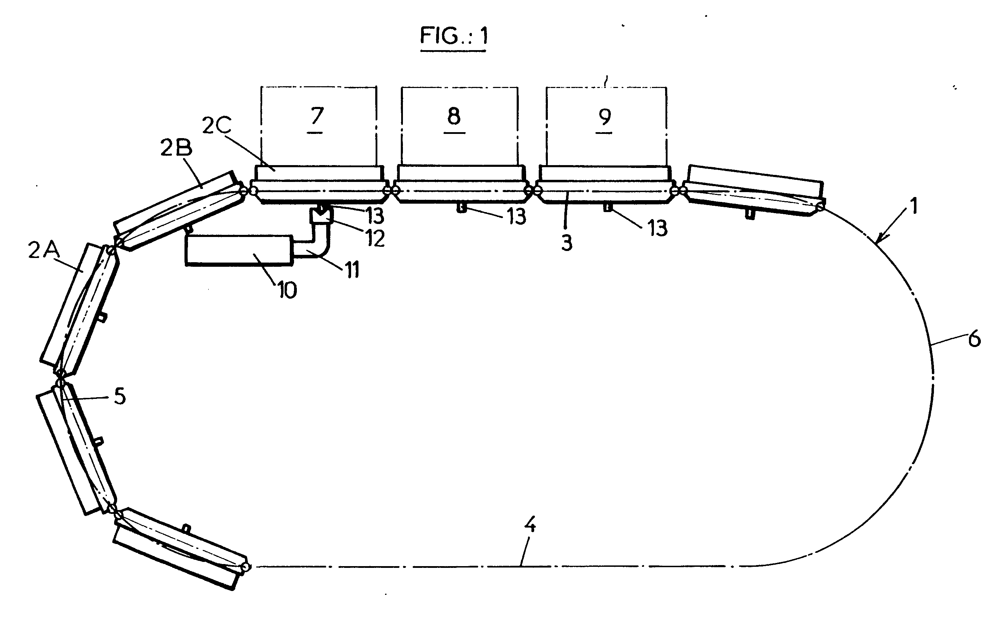

Figure 1 est une vue d'ensemble schématique en élévation d'un dispositif de transport de pièces, qui fait partie d'une chaîne de contrôle de composant électronique.

Figure 2 correspond à un agrandissement d'une partie de la figure 1,.

Figure 3 correspond à un nouvel agrandissement d'une partie de la figure 2.

Figure 4 est une vue en coupe transversale, selon la ligne IV-IV de la figure 3.

Un rail 1 définit le trajet en circuit fermé d'un certain nombre de chariots-supports de 2A, 2B, 2C etc.. Le rail 1 comprend deux parties rectilignes horizontales 3, 4, situées l'une au-dessus de l'autre, et réunies par deux parties en demi-cercle 5 et 6. On notera que, sans sortir de l'invention, le tracé du rail 1 peut être différent, par exemple être dans un plan horizontal au lieu d'un plan vertical. Il peut également épouser une forme différente, non plane par exemple. La partie supérieure 3 du trajet du rail 1 traverse un poste de chargement 7, un poste de traitement 8 et un poste de déchargement 9. Le déplacement des chariots-supports entre ces postes est assuré à l'aide d'un vérin 10, dont la tige 11 porte une pièce d'entraînement 12 qui coopère avec un doigt de repérage et d'actionnement 13 prévu sur chaque chariot-support. Des moyens, non représentés, permettent l'effacement de la pièce 12 lorsque le vérin, après avoir déplacé un chariot-support, revient à sa position initiale.

Dans l'exemple représenté, la longueur totale du rail 1 est égale, ou très légèrement supérieure, à la longueur cumulée des chariots 2a, 2b etc.. qu'il porte. On conçoit que chaque actionnement du vérin fait avancer simultanément l'ensemble des chariots-supports, chacun poussant le précédent. Il est également possible de prévoir un moyen d'actionnement supplémentaire, par chaîne ou autrement, pour amener les chariots-supports dans une position telle qu'ils seront repris par le vérin 10.

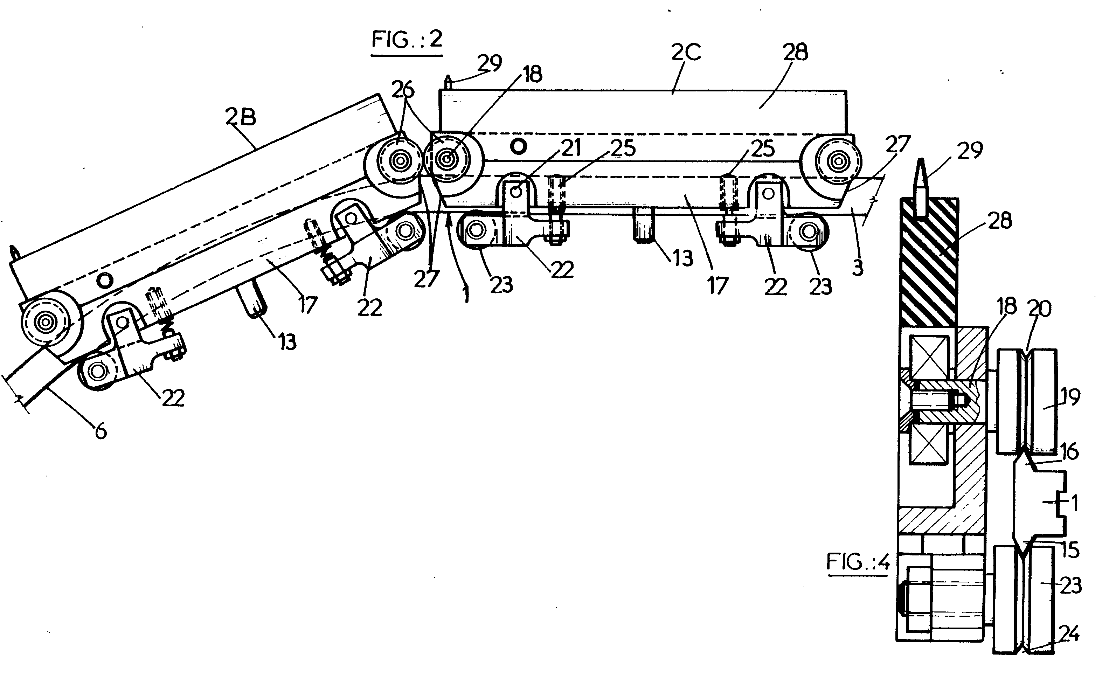

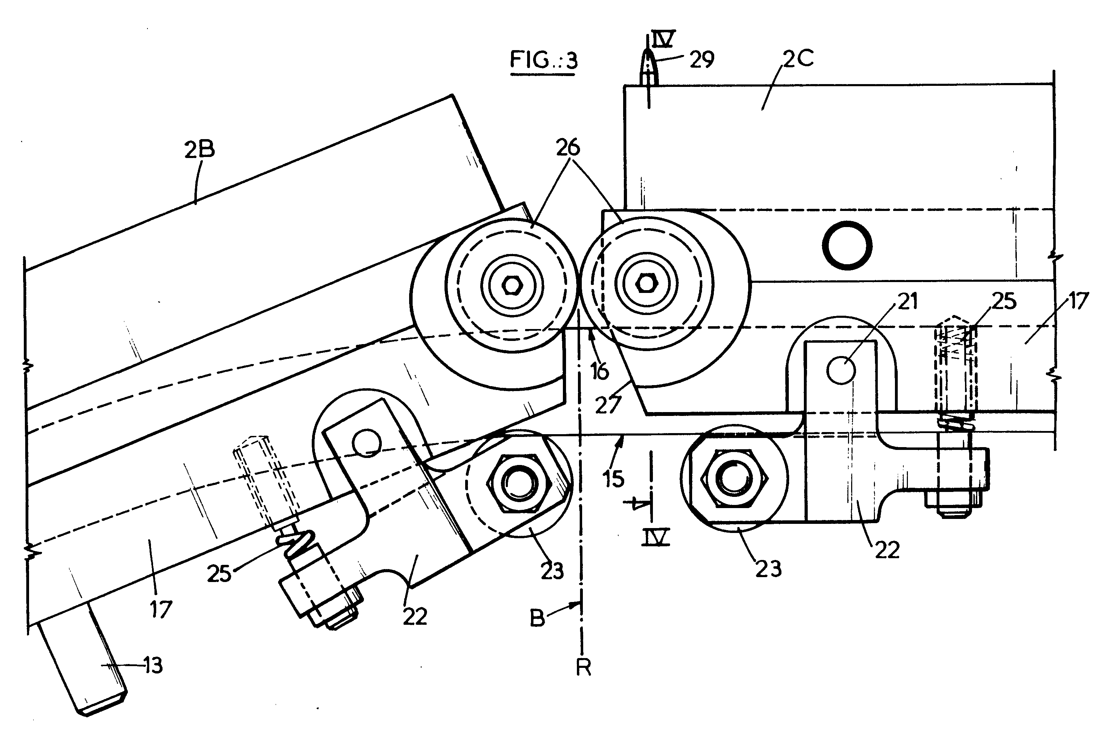

Les figures 2 et 3 montrent la position relative de deux chariots 2B, 2C, situés, le premier sur une partie en arc de cercle 6 du rail 1, l'autre sur la partie rectiligne du rail 3 qui lui fait suite. Le rail 1 a une section comportant deux parties opposées formant un angle vif, l'un 15 par le bas, l'autre 16 vers le haut (voir figure 4). Chaque chariot-support comporte un châssis métallique 17, sur lequel est monté, à chacune de ses extrémités longitudinales, un arbre transversal 18, qui porte un galet 19. Ce galet 19 présente une gorge 20, à section en V, dont l'angle est adapté à l'angle vif 16 de la section du rail 1. Le châssis 17 porte, en outre, par l'intermédiaire d'un autre axe transversal 21, un équipage mobile 22, sur lequel est monté un second galet 23, de forme identique à celle du galet 19, et dont la rainure en V 24 coopère avec l'angle vif inférieur 15 de la section du rail 1. Un ressort 25 prend appui d'une part sur le chassis 17, et d'autre part, sur l'équipage mobile 22, et agit de façon à pousser le galet 23 vers le rail 1, si bien que celui-ci est serré entre les deux galets 19 et 23.

Un roulement à billes 26 est monté avec sa couronne intérieure fixée sur l'arbre 18, du côté opposé au galet 19 par rapport au châssis 17.

Comme on le voit clairement sur les figures 2 et 3, la forme du châssis 17 est telle que deux chariots-supports 2B et 2C consécutifs sont en contact l'un avec l'autre par la bague extérieure de leur roulement à billes 26. Pour éviter que les châssis 17 de deux chariots-supports consécutifs viennent en contact dans une partie curviligne du rail, l'extrémité du châssis 17 présente une partie oblique 27. En outre, la forme et la position de l'équipage mobile 22 sont prévues pour que le galet 23 soit en retrait par rapport au roulement à billes 26, quand le chariot est sur une partie rectiligne du rail 1. Pour être précis, on peut indiquer que la partie oblique 27 du châssis et un plan tangent au galet 23 n'atteignent pas le rayon de courbure R de la partie curviligne du rail.

Il est cependant avantageux que le galet mobile 23 soit à faible distance du galet fixe 19. On réduit ainsi l'amplitude du déplacement de l'équipage mobile lorsque le chariot-support passe d'une partie rectiligne du trajet à une partie courbe de celui-ci, et cela réduit l'usure.

Par ailleurs, le fait que le roulement à billes 26 est coaxial au galet 19 a pour conséquence que les efforts transmis d'un chariot-support à un autre, pour leurs déplacements par exemple, n'entraînent pas de réaction sur le contact du galet 19 avec le rail 1, ce qui est un gage de longévité pour l'un et pour l'autre, et donc de longue durée de la précision.

Dans l'exemple représenté, la partie inférieure du châssis 17 est en acier, pour procurer le maximum de rigidité, et la partie supérieure 28 est en une matière électriquement isolante, le dispositif étant destiné à des contrôles électriques.

On a représenté en 29 un doigt d'indexage précis, placé à la partie supérieure du châssis, et qui est destiné à permettre le positionnement très précis des pièces à traiter par rapport au châssis, ainsi que le positionnement relatif exact du châssis par rapport aux moyens de chargement et, surtout, de traitement.

Si on désire enlever un chariot-support du dispositif, il suffit de déplacer l'équipage mobile 22 contre la force du ressort 25, jusqu'à ce que l'écartement des galets 19 et 23 permette de sortir les extrémités 15 et 16 de la section du rail 1 des nervures 20 et 24 des galets. La remise en place se fait de la même façon.

Comme on le voit, on obtient un positionnement précis dans le sens transversal des chariots-supports par rapport au rail grâce aux formes conjuguées de ce rail et des galets 19-23, ainsi qu'un positionnement précis dans le sens longitudinal de deux chariots-supports l'un par rapport à l'autre grâce au faible jeu des roulements à billes 26, qui assurent un contact direct et sans usure entre les chariots.

**Revendications**

1. Dispositif pour transporter des pièces à traiter vers un poste de traitement et pour les en évacuer, ce dispositif comportant :
- une série de supports (2A, 2B, 2C) prévus pour supporter chacun au moins une pièce,
- des moyens de déplacement prévus pour déplacer les supports suivant un trajet fermé comprenant un poste de chargement (7), où les pièces à traiter sont posées ou fixées sur les supports, un ou plusieurs postes de traitement (8), où les pièces sont amenées dans une position définie à l'avance et sont traitées, et un poste d'évacuation (9), où les pièces traitées sont séparées des supports,
ces moyens de déplacement comprenant au moins un rail (1) le long duquel les supports se déplacent entre le poste de chargement (7), le ou les postes de traitement (8) et le poste d'évacuation (9), chacun d'eux étant en appui sur le support précédent, caractérisé en ce que :
- chaque support (2A, 2B, 2C) est pourvu, au moins à une de ses extrémités, d'un roulement à billes (26) ou à rouleaux par lequel il vient en contact avec le support qui le précède ou le suit,
- chaque support est en contact avec le rail (1) tout le long dudit trajet fermé,
- le contact du support avec le rail est obtenu au moyen de galets (19, 23) dont un au moins est pressé contre le rail à l'aide d'un moyen élastique (25).

2. Dispositif selon la revendiction 1, caractérisé en ce que le rail a une section comportant deux angles saillants opposés (15, 16), et au moins deux galets comportant une gorge (20, 24) de forme adaptée auxdits angles saillants, les galets coopérant chacun avec un angle saillant opposé, l'un des galets étant porté par un équipage mobile (22), contraint par un ressort (25), et qui pousse ledit galet contre le rail pour assurer le positionnement précis du support dans le sens transversal.

3. Dispositif selon l'une des revendications 1 ou 2, caractérisé en ce que les moyens de déplcement des supports comprennent un vérin (10) qui fait avancer les supports au moins entre le poste de chargement et le premier poste de traitement.

4. Dispositif selon l'une des revendications 1 à 3, caractérisé en ce que chaque chariot est pourvu de moyens de repérage (29) de sa position dans le sens du déplacement.

5. Dispositif selon l'une des revendications 1 à 4, caractérisé en ce qu'il est pourvu de moyens permettant l'enlèvement ou la mise en place rapide d'un support par écartement d'au moins un galet (23) par rapport au rail.

6. Dispositif selon l'une des revendications 1 à 5, caractérisé en ce que le roulement à billes (26) ou à rouleaux est coaxial avec un des galets (19) assurant le contact du support avec le rail (1).

FIG.:1

FIG.:2

FIG.:4

EP 0 390 658 A1

FIG.:3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 573 853 (SIG)<br>* En entier *<br>----- | 1 | B 65 G 35/08<br>B 61 B 13/00 |

**DOMAINES TECHNIQUES RECHERCHES (Int. Cl.5)**

B 65 G
B 61 B
B 61 C

Le présent rapport a été établi pour toutes les revendications

| Lieu de la recherche | Date d'achèvement de la recherche | Examinateur |
|---|---|---|
| LA HAYE | 13-06-1990 | SCHMAL R. |

EPO FORM 1503 03.82 (P0402)